# EUROPEAN PATENT SPECIFICATION

(11) **EP 4 130 382 B1**
(45) Date of publication and mention of the grant of the patent: **09.10.2024**
(21) Application number: 22189048.6
(22) Date of filing: 05.08.2022
(51) Int. Cl.: E01C 13/08, C09K 17/16, B29B 9/16

(54) **PROCESS FOR THE MANUFACTURE OF FILLER MATERIAL FOR SYNTHETIC TURF AND FILLER MATERIAL FOR SYNTHETIC TURF**
VERFAHREN ZUR HERSTELLUNG VON FÜLLMATERIAL FÜR KUNSTRASEN UND FÜLLMATERIAL FÜR KUNSTRASEN
PROCÉDÉ DE FABRICATION DE MATÉRIAU DE REMPLISSAGE POUR GAZON SYNTHÉTIQUE ET MATÉRIAU DE REMPLISSAGE POUR GAZON SYNTHÉTIQUE

(30) Priority: 05.08.2021 IT 202100021329
(43) Date of publication of application: 08.02.2023
(73) Proprietor: VECCHIO & NUOVO S.r.l., 20019 Settimo Milanese (MI) (IT); Terzi, Luciano, 21055 Gorla Minore (VA) (IT); Mazzantini, Marina, 20137 Milano (IT)
(72) Inventor: PRINCIPI, Adalberto, 20019 Settimo Milanese (MI) (IT); TERZI, Luciano, 21055 Gorla Minore (VA) (IT); PRINCIPI, Alessandro, 20155 Milano (IT); TONANI, Alberto, 13030 Casanova Elvo (VC) (IT)
(74) Representative: Brunacci, Marco

(56) References cited:
- EP-A1- 2 087 066
- WO-A1-2020/120799
- GB-A- 2 215 731
- US-A1- 2017 058 464
- US-A1- 2018 371 708

## Description

### Technical Field

The present invention relates to a process for the manufacture of filler material for synthetic turf and a filler material for synthetic turf.

### Background Art

Typically, a synthetic turf consists of a base layer of polymeric or polypropylene material, possibly coupled to one or more insulating layers, to which synthetic filaments are attached that simulate natural turf. Between the filaments, a filler material, called "infill", is generally distributed, comprising a lower stabilizing layer of sand followed by an upper performance layer of granular material that may be synthetic, natural or a mixture of the two.

The infill gives the turf various mechanical and physical characteristics, the composition and laying of which is usually chosen depending on the target sport discipline. These characteristics, in fact, should simulate those of natural turf as much as possible, such as, e.g., elasticity for the user and for ball bounce, shock absorption capacity, tensile strength and resistance to tears caused by shoes, compressive strength, homogeneity, drainage, etc.

There are very many types of infill and related processes described in the state of the art. Generally, the granular material used to fill the infill is recycled thermoplastic synthetic-derived material (such as, e.g., EPDM) or SBR normally obtained from shredding used tires which, however, has obvious negative environmental impacts.

Over the years, alternatives to the classic widely used materials using synthetic rubber granular materials have been investigated by attempting to address towards natural plant materials in fibrous, ground and/or shredded form such as cork, coconut, peat or other plant materials derived from the bark of shrubs and plants as described, for example, in WO2006/109110 and WO2007/010324.

One problem with using natural/vegetal materials is the low specific gravity value of the various components. In particular, the cork used today in soccer fields, indoor and outdoor sports areas and children's play areas has a specific gravity (measured in granular form) of about 0.10 g/cm³ with a tendency, therefore, to float in case of rainfall as well as volatility in case of strong wind that causes it to shift with respect to its original laying position. A problem that is even more evident taking also into account that the fields are curved in such a way as to drain rainwater outwards, an aspect that over time leads to the drift of much of the infill material and thus also of the granules towards the edges of the field.

To overcome these drawbacks, granule coating systems have been developed such as the one described, for example, in EP2087066 with the purpose of waterproofing and saturating the pores with natural and/or synthetic one- or two-component resin. However, these solutions, too are ill-suited for real and effective use as the increase in specific gravity is not sufficient to overcome the aforementioned problems of flotation and/or volatility. In addition, coating materials often need to be fortified with substances adapted to make the granules flame retardant, to prevent mold formation and bacterial colonies thus mitigating to some extent the ecological aim of the solution.

Other examples of prior art can be found in documents GB2215731A, US2017/058464A1, WO2020/120799A1 and US2018/371708A1.

### Description of the Invention

Thus, a solution was devised to obtain a filler material coated according to techniques and materials that are as natural as possible and that allows an effective raising of the specific gravity of the cork granule.

Therefore, the present invention relates to a process for the manufacture of filler material for synthetic turf in accordance with claim 1.

An additional object of the present invention relates to a filler material for synthetic turf in accordance with claim 8.

Further characteristics and advantages of the process, the filler material and coating substance in accordance with the present invention will result from the description below of its preferred examples of embodiment.

### Embodiments of the Invention

The process for the manufacture of filler material for synthetic turf uses a coating substance configured to be combined with cork in granular form. In experimental tests carried out, the substance according to the present invention proved to be extremely effective in respecting the physical and mechanical properties of cork. Indeed, as is well known, much of the physical and mechanical properties of cork are due to the structural characteristics at the cell level and to the chemical structure of the plant wall (more than 40 percent suberin, lignin and polysaccharides). Untreated granulated cork generally has a specific gravity of 0.11-0.2 g/cm³ (measured in granular form) and a thermal conductivity of about 0.045 W/(m·K). The main characteristics of untreated cork can be summarized as follows:
- low specific gravity and light weight: cork cells are 90% occupied by air,
- impermeability: suberin present in the cell wall make cork virtually impermeable to liquids and gases,
- low heat transfer and good thermal insulation caused by the high gas content,
- sound insulation and low sound transmission, low specific gravity and high porosity make most sound waves absorbable and convertible into thermal energy,
- shock-absorbing capacity: this is given by the bending deformation of the cell walls and is a very important property for some applications,
- compressibility, elasticity and flexibility: the high air content of its cells allows it to be compressed to almost half its volume without losing flexibility, and recovering its shape and volume when not subjected to pressure,
- durability, stability and rigidity: lignin and polysaccharides in its cell wall give it rigidity and make it durable over time,
- 100% natural, recyclable and renewable: it is a plant material that can be extracted without hurting the tree from which it is derived and that regenerates over the years; it ensures a sustainable balance between agroforestry management and human action in line with current trends in natural materials and sustainable building.

Advantageously, the coating substance configured to be combined with cork in granular form is characterized by a melting value of between 60°C and 140°C, preferably between 70°C and 100°C.

Preferably, the coating substance has a penetration index between 4 mm and 80 mm at 25°C, preferably between 4 mm and 25 mm.

In the remainder of this description and in the subsequent claims, "penetration index" means the depth measurement by which a standard-sized needle sinks into a substance under certain conditions of load, time and temperature, dictated by various standards, such as e.g., UNI EN 1426 or ASTM D1231. The test is carried out using a penetrometer, which applies a load equal to 100 g for a time of 5 seconds at a temperature of 25°C. The exact temperature of the sample being tested is ensured by dipping it in a thermostatic bath, for a time equal to 60 minutes, by means of a thermostatically-controlled cell. This test is used to determine the consistency and hardness of a given substance. The higher the penetration index, the "softer" the substance is considered to be.

Advantageously, the coating substance covered by this invention and configured to be combined with cork is wax.

In the following description and the subsequent claims, the term "wax" comprises materials of different origins and compositions. Generally, materials called "waxes" are sticky solids which melt and exhibit different levels of gloss and plasticity. Waxes are divided into two macro-families, natural waxes and synthetic waxes. The former are differentiated by their extraction, i.e., fossil (petrochemical and from lignite) or non-fossil (animal and plant); the latter are obtained by total or partial chemical synthesis. Waxes of petrochemical origin are commonly called paraffins and may have C20-C60 alkyl, branched alkyl or naphthalene chains. Differently, waxes of animal or plant origin are commonly identified as esters of monohydric alcohols or glycerol esters. In addition, it should be specified that waxes of petrochemical origin have a highly variable chain distribution compared to vegetable or animal waxes.

Preferably, the wax of the invention is natural wax or synthetic wax.

In accordance with one embodiment, natural wax comprises a substance selected from the group comprising: carnauba wax, beeswax, myrtle wax, candelilla wax, rice wax, esparto wax, ouricury wax, spermaceti, Chinese wax, lanolin, shellac, vegetable stearin, paraffins, magnesium stearate, stearic acid or suitable mixtures thereof.

In accordance with one embodiment, synthetic wax comprises a substance selected from the group comprising: paraffins, microcrystalline waxes, polyethylene waxes or suitable mixtures thereof.

In accordance with one embodiment, wax has a melting value of between 60°C and 140°C, preferably between 70°C and 100°C.

In accordance with another embodiment, wax has a penetration index of between 4 mm and 80 mm at 25°C, preferably between 4 mm and 25 mm. Preferably, the mass of wax used in the process according to the invention has a specific gravity of about 1 g/cm³.

The process covered by the invention comprises a phase of having a predetermined amount of cork material in granular form with a predetermined initial specific gravity and a phase of having a predetermined mass of coating substance as described above.

Preferably, the granulated cork is sourced from Italy.

The mass of coating substance is natural wax, synthetic wax or suitable mixtures thereof.

Preferably, the cork granules are arranged in bags and previously weighed on appropriate load cells. It should be specified that each cork granule has a substantially spherical shape having a diameter of between 0.5 mm and 4 mm. Additionally, each cork granule has an initial/starting specific gravity having a value of about 0.11 g/cm³, measured with a graduated cylinder.

Via a conveying line, the cork granules are sent towards a mixer.

Conveniently, the wax mass, preferably in the form of blocks or flakes, is placed inside a melting device to be heated until the melting point is reached. The wax is heated to a temperature of between 90 °C and 140 °C, preferably 100 °C. The melting point is reached over a period of 10 minutes to 60 minutes, preferably 20 minutes.

From the melting device, the melted wax is sent via a suitable hydraulic line, configured to keep the wax at temperature, towards the mixer. Conveniently, the hydraulic line terminates with one or more nozzles arranged above the mixer and intended to spray the melted wax against the cork granules.

In accordance with one embodiment, it is possible to provide two or more melting devices connected to each other, preferably in parallel, by suitable valve means so that the sending of the melted wax towards the mixer occurs continuously.

As anticipated above, the nozzles are oriented towards the mixer in order to spray/nebulize/percolate the melted wax above the cork granules while the latter are moved by the mixer. This phase involves mixing the cork material with the wax mass to obtain a granular filler material made of coated cork having a predetermined final specific gravity and thus intended for use in synthetic turf the main characteristics of which will be highlighted later in this detailed description.

Mixing takes place for a period of between 10 minutes and 60 minutes, preferably 20 minutes.

Advantageously, due to the phases in the aforementioned process and to the physical and mechanical properties of the wax, the melted mass is able to distribute and flow over the surface section of the cork granule homogeneously without crystallizing where the melted mass is fed in.

A further phase involves cooling the granular filler material made of coated cork. Specifically, it can be cooled inside the mixer or outside by means of settling tanks.

At the end of the mixing phase, the ratio of the final specific gravity to the initial specific gravity of the cork material is of between 1.7 and 4.5.

In accordance with one embodiment, the ratio of the final specific gravity to the initial specific gravity of the cork material is of between 2 and 3, preferably about 2.4.

Even more preferably, the ratio of the final specific gravity to the initial specific gravity of the cork material is about 2.36.

Basically, the specific gravity of the granular filler material made of coated cork has a specific gravity of approximately between 0.18 g/cm³ and 0.50 g/cm³, preferably 0.26 g/cm³. The increase of the specific gravity around these values combined with effective drainage of a synthetic turf allows avoiding the classic problems of flotation and volatility inherent in infill with unprocessed cork granules.

Several tests were carried out to verify the actual raising of the specific gravity of the cork granules and to check the physical and mechanical properties of the granular filler material made of coated cork thus obtained.

A first test was carried out by introducing cold (at about 25°C) into a paddle mixer, 2.539 kg of cork granules having an initial specific gravity of about 0.11 g/cm³, of Italian origin and with granule diameters ranging from 0.5 mm to 4 mm. Following rapid stirring, 3.461 kg of yellow beeswax melted at a temperature of about 100°C was introduced. After about 5 minutes of mixing, the melted mass of wax began to distribute and flow over the surface section of the granule evenly without crystallizing also thanks to the very low thermal conductivity of the cork granules.

A second test was carried out by introducing cold (at about 25°C) into a paddle mixer, 2.539 kg of cork granules having an initial specific gravity of about 0.11 g/cm³, of Italian origin and with granule diameters ranging from 0.5 mm to 4 mm. Following rapid stirring, 3.460 kg of carnauba wax melted at a temperature of about 100°C was introduced. After about 5 minutes of mixing, the melted mass of wax began to distribute and flow over the surface section of the granule evenly without crystallizing also thanks to the very low thermal conductivity of the cork granules.

In both tests, the waxes had a melting point of about 70°C, a high penetration index due to the high content of oils and esters with low molecular weight.

In both tests, the resulting granular filler material made of coated cork had:
- a final specific gravity of 0.260 g/cm³,
- a shinier appearance than the starting cork granules,
- nearly the same volume as the starting cork granules.

In conclusion, this resulted in a granular filler material made of coated cork that is softer and stickier to the touch than the starting cork granule material.

As found by the present description, it has been ascertained that the described invention achieves the intended objects, and in particular, the fact is emphasized that the manufacture of the granular filler material made of cork coated with wax makes it possible to raise the specific weight of the starting cork granulate without, however, altering its physical and mechanical properties ensuring highly effective applicability in synthetic soccer fields, indoor and outdoor sports areas, and children's play areas as well as to obtain a material that is completely eco-sustainable, thus safeguarding the environment and natural resources.

Another key object of the invention is to enable recycling and reuse of the infill material covered by the invention at the end of its life cycle. The dismantling or replacement of synthetic turf in fact involves the suction of the infill granules according to techniques that are known in themselves but are difficult to separate. The use of cork granules with increase in specific gravity such that they can still float in water allows a simplified separation phase of the sand stabilizer from the cork granules. In this context, it is therefore possible to provide a phase in which the sucked filler material is placed in water, or similar liquids, so that the sand sinks while the cork granules remain on the surface for later easy picking.

## Claims

1. Process for the manufacture of granular filler material for synthetic turf, comprising
the phases of:
- having cork material in granular form with a predetermined initial specific gravity,
- having a mass of a natural or synthetic wax coating substance with a melting point of between 90 °C and 140 °C and a penetration index of between 4 and 80 mm at 25 °C,
- heating said mass of coating substance until it reaches the melting point,
- joining said mass of coating substance to said mass of cork,
- mixing said cork material in granular form with said mass of coating substance to obtain a granular
filler material for synthetic turf with a final specific gravity of the granular filler material of between 0.18 g/cm³ and 0.50 g/cm³, preferably 0.26 g/cm³,
- allowing said filler material to cool down.

2. Process according to the preceding claim, wherein the ratio of the final specific gravity to the initial specific gravity of the cork material is of between 1.7 and 4.5.

3. Process according to the claim 1 or 2, wherein the ratio of the final specific gravity to the initial specific gravity of the cork material is of between 2 and 3, preferably about 2.4.

4. Process according to the preceding claim, wherein said mass of natural wax comprises a substance selected from the group comprising: Carnauba wax, beeswax, myrtle wax, candelilla wax, rice wax, esparto wax, ouricury wax, spermaceti, Chinese wax, lanolin, shellac, vegetable stearin, paraffins, magnesium stearate, stearic acid or suitable mixtures thereof, and said mass of synthetic wax comprises a substance selected from the group comprising: paraffins, microcrystalline waxes, polyethylene waxes or suitable mixtures thereof.

5. Process according to the preceding claim, wherein said phase of heating takes place at a temperature of between 90 °C and 140 °C, preferably 100 °C.

6. Process according to any one of the preceding claims, wherein said phase of joining said mass of filling substance to said mass of cork comprises the phase of pouring said coating substance onto said cork material in granular form.

7. Process according to any one of the preceding claims, wherein said phase of mixing said cork material with said mass of coating substance takes place for a period of between 10 minutes and 60 minutes, preferably 20 minutes.

8. Filler material for synthetic turf in granular form, **characterized by** the fact that it comprises cork material in granular form and a natural or synthetic wax coating substance distributed and flowed over the surface section of the cork granule obtaining a specific gravity of the granular filler material of between 0.18 g/cm3 and 0.50 g/cm3, preferably 0.26 g/cm3.

9. Filler material according to the preceding claim, wherein said mass of natural wax comprises a substance selected from the group comprising: carnauba wax, beeswax, myrtle wax, candelilla wax, rice wax, esparto wax, ouricury wax, spermaceti, Chinese wax, lanolin, shellac, vegetable stearin, paraffins, magnesium stearate, stearic acid or suitable mixtures thereof.

10. Filler material according to claim 9, wherein said mass of synthetic wax comprises a substance selected from the group comprising: paraffins, microcrystalline waxes, polyethylene waxes or suitable mixtures thereof.

## Patentansprüche

1. Verfahren zur Herstellung von körnigem Füllmaterial für Kunstrasen, umfassend die folgenden Phasen:
- Bereitstellen von Korkmaterial in körniger Form mit einem vorbestimmten anfänglichen spezifischen Gewicht,
- Bereitstellen einer Masse aus einer natürlichen oder synthetischen Wachs-Beschichtungssubstanz mit einem Schmelzpunkt zwischen 90 °C und 140 °C und einem Penetrationsindex zwischen 4 und 80 mm bei 25 °C,
- Erhitzen der Masse der Beschichtungssubstanz, bis sie den Schmelzpunkt erreicht,
- Verbinden der Masse der Beschichtungssubstanz mit der Masse des Korks,
- Mischen des körnigen Korkmaterials mit der Masse der Beschichtungssubstanz, um ein körniges Füllmaterial für Kunstrasen mit einem spezifischen Endgewicht des körnigen Füllmaterials zwischen 0,18 g/cm³ und 0,50 g/cm³, vorzugsweise 0,26 g/cm³, zu erhalten,
- Abkühlenlassen des Füllmaterials.

2. Verfahren nach dem vorhergehenden Anspruch, wobei das Verhältnis des spezifischen Endgewichts zum spezifischen Anfangsgewicht des Korkmaterials zwischen 1,7 und 4,5 liegt.

3. Verfahren nach Anspruch 1 oder 2, wobei das Verhältnis des spezifischen Endgewichts zum spezifischen Anfangsgewicht des Korkmaterials zwischen 2 und 3, vorzugsweise etwa 2,4, beträgt.

4. Verfahren nach dem vorhergehenden Anspruch, wobei die Masse aus natürlichem Wachs eine Substanz umfasst, die ausgewählt ist aus der Gruppe, die umfasst: Carnaubawachs, Bienenwachs, Myrtenwachs, Candelillawachs, Reiswachs, Espartowachs, Ouricurywachs, Walrat, Chinawachs, Lanolin, Schellack, pflanzliches Stearin, Paraffine, Magnesiumstearat, Stearinsäure oder geeignete Mischungen davon, und die Masse aus synthetischem Wachs eine Substanz umfasst, die ausgewählt ist aus der Gruppe, die umfasst: Paraffine, mikrokristalline Wachse, Polyethylenwachse oder geeignete Mischungen davon.

5. Verfahren nach dem vorhergehenden Anspruch, wobei die Erhitzungsphase bei einer Temperatur zwischen 90 °C und 140 °C, vorzugsweise bei 100 °C, stattfindet.

6. Verfahren nach einem der vorhergehenden Ansprüche, wobei die Phase des Verbindens der Masse der Füllsubstanz mit der Masse des Korks die Phase des Aufgießens der Beschichtungssubstanz auf das Korkmaterial in körniger Form umfasst.

7. Verfahren nach einem der vorhergehenden Ansprüche, wobei die Phase des Mischens des Korkmaterials mit der Masse der Beschichtungssubstanz für einen Zeitraum zwischen 10 Minuten und 60 Minuten, vorzugsweise für 20 Minuten, stattfindet.

8. Füllmaterial für Kunstrasen in körniger Form, **dadurch gekennzeichnet, dass** es Korkmaterial in körniger Form und eine natürliche oder synthetische Wachs-Beschichtungssubstanz umfasst, die über den Oberflächenbereich des Korkgranulats verteilt ist und fließt, wobei ein spezifisches Gewicht des körnigen Füllmaterials zwischen 0,18 g/cm³ und 0,50 g/cm³, vorzugsweise 0,26 g/cm³, erreicht wird.

9. Füllmaterial nach dem vorhergehenden Anspruch, wobei die Masse aus natürlichem Wachs eine Substanz umfasst, die aus der Gruppe ausgewählt ist, die umfasst: Carnaubawachs, Bienenwachs, Myrtenwachs, Candelillawachs, Reiswachs, Espartowachs, Ouricurywachs, Walrat, Chinawachs, Lanolin, Schellack, pflanzliches Stearin, Paraffine, Magnesiumstearat, Stearinsäure oder geeignete Mischungen davon.

10. Füllmaterial nach Anspruch 9, wobei die Masse aus synthetischem Wachs eine Substanz umfasst, die ausgewählt ist aus der Gruppe, die umfasst: Paraffine, mikrokristalline Wachse, Polyethylenwachse oder geeignete Mischungen davon.

## Revendications

1. - Procédé de fabrication d'un matériau de charge granulaire pour gazon synthétique, comprenant les phases consistant à :
- prendre un matériau de liège sous forme granulaire ayant une masse volumique initiale prédéterminée ;
- prendre une masse d'une substance de revêtement de cire naturelle ou synthétique ayant un point de fusion d'entre 90 °C et 140 °C et un indice de pénétration d'entre 4 et 80 mm à 25 °C ;
- chauffer ladite masse de substance de revêtement jusqu'à ce qu'elle atteigne le point de fusion ;
- assembler ladite masse de substance de revêtement à ladite masse de liège ;
- mélanger ledit matériau de liège sous forme granulaire avec ladite masse de substance de revêtement pour obtenir un matériau de charge granulaire pour gazon synthétique ayant une masse volumique finale du matériau de charge granulaire d'entre 0,18 g/cm³ et 0,50 g/cm³, de préférence de 0,26 g/cm³ ;
- laisser refroidir ledit matériau de charge.

2. - Procédé selon la revendication précédente, dans lequel le rapport de la masse volumique finale à la masse volumique initiale du matériau de liège est d'entre 1,7 et 4,5.

3. - Procédé selon l'une des revendications 1 ou 2, dans lequel le rapport de la masse volumique finale à la masse volumique initiale du matériau en liège est d'entre 2 et 3, de préférence d'environ 2,4.

4. - Procédé selon la revendication précédente, dans lequel ladite masse de cire naturelle comprend une substance choisie dans le groupe comprenant : la cire de Carnauba, la cire d'abeilles, la cire de myrte, la cire de Candelilla, la cire de riz, la cire d'Esparto, la cire ouricury, le spermaceti, la cire de Chine, la lanoline, la gomme-laque, la stéarine végétale, les paraffines, le stéarate de magnésium, l'acide stéarique ou leurs mélanges appropriés, et ladite masse de cire synthétique comprend une substance choisie dans le groupe comprenant : les paraffines, les cires microcristallines, les cires de polyéthylène ou leurs mélanges appropriés.

5. - Procédé selon la revendication précédente, dans lequel ladite phase de chauffage a lieu à une température d'entre 90°C et 140°C, de préférence de 100°C.

6. - Procédé selon l'une quelconque des revendications précédentes, dans lequel ladite phase d'assemblage de ladite masse de substance de charge à ladite masse de liège comprend la phase de versement de ladite substance de revêtement sur ledit matériau de liège sous forme granulaire.

7. - Procédé selon l'une quelconque des revendications précédentes, dans lequel ladite phase de mélange dudit matériau de liège avec ladite masse de substance de revêtement a lieu pendant une durée d'entre 10 minutes et 60 minutes, de préférence de 20 minutes.

8. - Matériau de charge pour gazon synthétique sous forme granulaire, **caractérisé par le fait qu'**il comprend un matériau de liège sous forme granulaire et une substance de revêtement de cire naturelle ou synthétique distribuée et coulée sur la section de surface des granulés de liège, permettant d'obtenir une masse volumique du matériau de charge granulaire d'entre 0,18 g/cm³ et 0,50 g/cm³, de préférence de 0,26 g/cm³.

9. - Matériau de charge selon la revendication précédente, dans lequel ladite masse de cire naturelle comprend une substance choisie dans le groupe comprenant : la cire de Carnauba, la cire d'abeilles, la cire de myrte, la cire de Candelilla, la cire de riz, la cire d'Esparto, la cire ouricury, le spermaceti, la cire de Chine, la lanoline, la gomme-laque, la stéarine végétale, les paraffines, le stéarate de magnésium, l'acide stéarique ou leurs mélanges appropriés.

10. - Matériau de charge selon la revendication 9, dans lequel ladite masse de cire synthétique comprend une substance choisie dans le groupe comprenant : les paraffines, les cires microcristallines, les cires de polyéthylène ou leurs mélanges appropriés.
